# EUROPÄISCHE PATENTSCHRIFT

(11) **EP 2 393 699 B1**
(45) Veröffentlichungstag und Bekanntmachung des Hinweises auf die Patenterteilung: **28.11.2012**
(21) Anmeldenummer: 10701540.6
(22) Anmeldetag: 29.01.2010
(51) Int. Cl.: B60W 10/06, B60W 10/02, B60K 6/48

(54) **VERFAHREN ZUM ANKOPPELN EINER BRENNKRAFTMASCHINE EINES PARALLEL-HYBRID-ANTRIEBSSTRANGES**
METHOD FOR COUPLING AN INTERNAL COMBUSTION ENGINE OF A PARALLEL-HYBRID DRIVE TRAIN
PROCÉDÉ D'ACCOUPLEMENT D'UN MOTEUR À COMBUSTION INTERNE D'UNE TRANSMISSION HYBRIDE PARALLÈLE

(30) Priorität: 09.02.2009 DE 102009000706
(43) Veröffentlichungstag der Anmeldung: 14.12.2011
(73) Patentinhaber: ZF Friedrichshafen AG, 88038 Friedrichshafen (DE)
(72) Erfinder: EISELE, Markus, 88048 Friedrichshafen (DE); SAUTER, Michael, 88430 Rot (DE)
(86) Internationale Anmeldenummer: PCT/EP2010/051052
(87) Internationale Veröffentlichungsnummer: WO 2010/089247

(56) Entgegenhaltungen:
- EP-A1- 1 839 986
- EP-A2- 1 526 023
- EP-A2- 1 925 521
- US-A1- 2002 170 758

## Beschreibung

Die Erfindung betrifft ein Verfahren zum Ankoppeln einer Brennkraftmaschine eines Parallel-Hybrid-Antriebsstranges gemäß der im Oberbegriff des Patentanspruches 1 näher definierten Art.

Das gattungsbildende Dokument US 2002/0170758 offenbart ein Verfahren zum Ankoppeln einer Brennkraftmaschine eines Parallel-Hybrid-Antriebsstranges über eine Kupplungseinrichtung mit dem Merkmalen des Oberbegriffs von Anspruch 1.

Aus der Praxis bekannte Parallel-Hybrid-Antriebsstränge sind üblicherweise mit einer Brennkraftmaschine, mit einer elektrischen Maschine und mit einer zwischen der Brennkraftmaschine und der elektrischen Maschine angeordneten Kupplungseinrichtung angeordnet. Die elektrische Maschine ist drehfest mit einer Getriebeeingangswelle eines in Bezug auf die elektrische Maschine abtriebsseitig angeordneten Getriebes verbunden, in dessen Bereich verschiedene Übersetzungen darstellbar sind. Die Drehzahl der elektrischen Maschine entspricht somit im Wesentlichen der Getriebeeingangsdrehzahl.

Während eines rein elektrischen Fahrbetriebes eines mit einem Parallel-Hybrid-Antriebsstrang ausgeführten Hybridfahrzeuges, während dem die Kupplungseinrichtung zwischen der Brennkraftmaschine und der elektrischen Maschine geöffnet ist und die Drehzahl der elektrischen Maschine höher als eine Leerlaufdrehzahl der Brennkraftmaschine ist und die Brennkraftmaschine im Leerlauf betrieben wird, ist die Kupplungseinrichtung bei einer betriebszustandsabhängigen Anforderung zum Ankoppeln der Brennkraftmaschine an den Antriebsstrang und somit zur Darstellung eines Hybridfahrbetriebes zu schließen.

Liegt eine entsprechende Anforderungen zum Schließen der Kupplungseinrichtung vor, wird die Drehzahl der Brennkraftmaschine vor dem Schließvorgang der Kupplungseinrichtung auf die Getriebeeingangsdrehzahl, welche mit der Drehzahl der elektrischen Maschine identisch ist, angehoben und die Kupplungseinrichtung synchronisiert. Dabei wird die Drehzahl der Brennkraftmaschine drehzahlgeregelt oder auch über eine Drehmomentregelung in Richtung der Synchrondrehzahl der Kupplungseinrichtung beschleunigt, die bei Erreichen ihres Synchronpunktes mit geringer Belastung geschlossen wird. Daran anschließend erfolgt der brennkraftmaschinenseitige Lastaufbau durch Regelung des Drehmomentes der Brennkraftmaschine.

Wird der Ankoppelvorgang der Brennkraftmaschine beispielsweise während einer Bergauffahrt durchgeführt, während der im Zugbetrieb des Antriebsstranges ein hohes Drehmoment angefordert wird, stellt die Brennkraftmaschine direkt nach dem Schließen der Kupplungsvorrichtung als maximales Antriebsmoment einen sich aus der Drehzahl-Drehmoment-Kennlinie der Brennkraftmaschine ergebenden Drehmomentwert zur Verfügung.

Nachteilhafterweise ist das von der Brennkraftmaschine nach dem Schließen der Kupplungsvorrichtung zur Verfügung gestellte Antriebsmoment bei entsprechend niedriger Drehzahl bzw. Synchrondrehzahl der Kupplungseinrichtung nicht ausreichend, um einen vom Fahrer erwarteten Leistungszuwachs umzusetzen. Das bedeutet, dass das Fahrzeug in derartigen Betriebszuständen des Antriebsstranges über die Brennkraftmaschine zunächst nur mäßig beschleunigbar ist. Gleichzeitig wird auf solch niedrigen Drehzahlniveaus der Brennkraftmaschine bei gleichzeitig hoher Drehmomentabgabe der Brennkraftmaschine das Gefühl eines demnächst abgewürgten Motors vermittelt.

Ein ähnlich ungünstiger Betriebszustandsverlauf stellt sich ein, wenn der Fahrer während der Ankopplung der Brennkraftmaschine an den Antriebsstrang ein Fahrpedal eines Fahrzeuges betätigt und spontan, beispielsweise fahrsituationsabhängig, ein deutlich höheres Fahrerwunschmoment anfordert. Zum Zeitpunkt, zu dem der Antriebsstrang sich durch synchrones Schließen der Kupplungseinrichtung im Hybridfahrbetrieb befindet, ist über die Brennkraftmaschine wiederum das angeforderte Drehmoment, welches zur Umsetzung der gewünschten Beschleunigung des Fahrzeuges erforderlich ist, nicht mit der entsprechenden Spontaneität bereitstellbar.

Während eines Betriebszustandsverlaufes, während dem im Schubbetrieb eines Parallel-Hybrid-Antriebsstranges ein Bremsmoment der Brennkraftmaschine angefordert wird, führt die vorbeschriebene aktive Beschleunigung der Brennkraftmaschine auf das Niveau der elektrischen Maschine bzw. der Getriebeeingangsdrehzahl des Antriebsstranges zu einem unerwünschten Kraftstoffverbrauch der Brennkraftmaschine.

Darüber hinaus wird eine Anforderung zum Ankoppeln der Brennkraftmaschine an den Antriebsstrang während eines Betriebszustandsverlaufes, während welchem sich ein Fahrwiderstand stark verändert, als kritisch angesehen. Dies resultiert aus der Tatsache, dass ein Fahrzeug im Zugbetrieb seines Parallel-Hybrid-Antriebsstranges bei Vorliegen einer spontanen Bergauffahrt in einem derartigen Umfang verzögert wird, dass ein Ankoppeln der Brennkraftmaschine technisch nicht mehr sinnvoll ist und die Kupplungseinrichtung wieder geöffnet werden muss, da in einem solchen Fall das antriebsseitige Zugkraftangebot zu gering ist und im Bereich des Getriebes eine Rückschaltung einzuleiten ist. Derartige Betriebszustandsverläufe sind durch hohe Betriebsgeräusche, einen niedrigen Fahrkomfort und eine unerwünscht hohe Unruhe sowie durch hohe Bauteilbelastungen gekennzeichnet.

Der vorliegenden Erfindung liegt daher die Aufgabe zugrunde, ein Verfahren zum Ankoppeln einer Brennkraftmaschine eines Parallel-Hybrid-Antriebsstranges zur Verfügung zu stellen, mittels welchem die vorbeschriebenen Nachteile vermieden werden.

Erfindungsgemäß wird diese Aufgabe mit einem Verfahren mit den Merkmalen des Patentanspruches 1 gelöst.

Bei dem erfindungsgemäßen Verfahren zum Ankoppeln einer Brennkraftmaschine eines Parallel-Hybrid-Antriebsstranges über eine zwischen der Brennkraftmaschine und einer elektrischen Maschine angeordnete Kupplungseinrichtung ausgehend von einem geöffneten Betriebszustand der Kupplungseinrichtung, einer Drehzahl der Brennkraftmaschine, welche wenigstens annähernd einer Leerlaufdrehzahl entspricht, und einer Drehzahl der elektrischen Maschine größer als die Leerlaufdrehzahl der Brennkraftmaschine, wobei im Zugbetrieb des Antriebsstranges und bei Vorliegen einer Anforderung zum Ankoppeln der Brennkraftmaschine sowie eines Antriebsdrehmomentwertes kleiner als eine Drehmomentschwelle die Drehzahl der Brennkraftmaschine auf die Drehzahl der elektrischen Maschine geführt und die Kupplungseinrichtung wenigstens annähernd im synchronen Betriebszustand geschlossen wird und anschließend das Drehmoment der Brennkraftmaschine angehoben wird, wird bei Vorliegen einer Anforderung eines Antriebsdrehmomentwertes größer als die Drehmomentschwelle die Drehzahl der Brennkraftmaschine auf einen Drehzahlwert oberhalb der Drehzahl der elektrischen Maschine geführt und die Kupplungseinrichtung bei Erreichen des Drehzahlwertes schlupfend geschlossen, während die Brennkraftmaschine im Schubbetrieb des Antriebsstranges bei Vorliegen einer Anforderung zum Ankoppeln der Brennkraftmaschine in die Schubabschaltung überführt wird und die Drehzahl der Brennkraftmaschine während des Schließvorganges der Kupplungseinrichtung in Abhängigkeit der Übertragungsfähigkeit der Kupplungseinrichtung auf die Drehzahl der elektrischen Maschine geführt wird.

Erfindungsgemäß betriebene Brennkraftmaschinen von Parallel-Hybrid-Antriebssträngen werden im Gegensatz zu herkömmlich betriebenen Brennkraftmaschinen bei Vorliegen einer Anforderung zum Ankoppeln der Brennkraftmaschinen im Zugbetrieb der Parallel-Hybrid-Antriebsstränge bei gleichzeitiger Anforderung hoher Antriebsmomente der Brennkraftmaschinen am Ende der Schließvorgänge der Kupplungseinrichtungen bereits auf Drehzahlniveaus betrieben, zu den die Brennkraftmaschinen jeweils ein wenigstens annähernd einem anforderungsgemäßen Drehmoment entsprechendes Drehmoment zur Verfügung stellen. Zusätzlich sind aufgrund der während der Schließvorgänge schlupfend betriebenen Kupplungseinrichtungen die Schwungmassen der rotierenden Brennkraftmaschinen nutzbar, d. h. sowohl die statischen Motormomente als auch die dynamischen Anteile, um im Bereich der Abtriebe jeweils ein angefordertes Abtriebsmoment wenigstens annähernd darstellen zu können.

Im Schubbetrieb von Parallel-Hybrid-Antriebssträngen ist mittels des Verfahrens nach der Erfindung im Bereich der Abtriebe jeweils ein gewünschtes Schubmoment durch Ankoppeln der Brennkraftmaschinen ohne Kraftstoffverbrauch der Brennkraftmaschinen zur Verfügung stellbar, da die Kupplungseinrichtungen die jeweils in der Schubabschaltung betriebenen Brennkraftmaschinen im Schlupfbetrieb auf die Drehzahlniveaus der elektrischen Maschinen führen.

Bei einer vorteilhaften Variante des Verfahrens nach der Erfindung wird die Drehzahl der Brennkraftmaschine bei Vorliegen der Anforderung zum Ankoppeln der Brennkraftmaschine und eines brennkraftmaschinenseitigen Antriebsdrehmomentwertes größer als die Drehmomentschwelle geregelt eingestellt.

Alternativ hierzu ist ein Antriebsmoment der Brennkraftmaschine bei Vorliegen der Anforderung zum Ankoppeln der Brennkraftmaschine und eines brennkraftmaschinenseitigen Antriebsdrehmomentwertes größer als die Drehmomentschwelle während dem Anheben der Drehzahl der Brennkraftmaschine auf einen vordefinierten Drehmomentwert begrenzbar, um ein undefiniertes Ansteigen der Drehzahl der Brennkraftmaschine mit geringem Steuer und Regelaufwand zu vermeiden.

Die Betätigung der Kupplungseinrichtung ist bei einem Wechsel der Anforderung der brennkraftmaschinenseitigen Antriebsmomentes und/oder bei einem Wechsel zwischen einem Zugbetrieb und einem Schubbetrieb des Antriebsstranges variierbar, womit beispielsweise einen Fahrkomfort eines Fahrzeuges beeinträchtigende Reaktionsmomente im Antriebsstrang vermieden werden können.

Weitere Vorteile und vorteilhafte Weiterbildungen der Erfindung ergeben sich aus den Patentansprüchen und dem unter Bezugnahme auf die Zeichnung prinzipmäßig beschriebenen Ausführungsbeispiel.

Es zeigt:
- Fig. 1: eine vereinfachte Darstellung eines Parallel-Hybrid-Antriebsstranges eines Fahrzeuges;
- Fig. 2: verschiedene Verläufe von Betriebsparametern des Parallel-Hybrid-Antriebsstranges gemäß Fig. 1 während eines Ankoppelvorganges der Brennkraftmaschine bei Anforderung eines Antriebsdrehmomentwertes kleiner als eine Drehmomentschwelle über der Zeit;
- Fig. 3 eine Fig. 2: entsprechende Darstellung der Verläufe der Betriebszustandsparameter während eines Ankoppelvorganges der Brennkraftmaschine bei Vorliegen einer Anforderung eines Antriebsdrehmomentwertes größer als die Drehmomentschwelle; und
- Fig. 4 eine Fig_{.} 2: entsprechende Darstellung der Verläufe der Betriebszustandsparameter während eines Ankoppelvorganges der Brennkraftmaschine im Schubbetrieb des Parallel-Hybrid-Antriebsstranges.

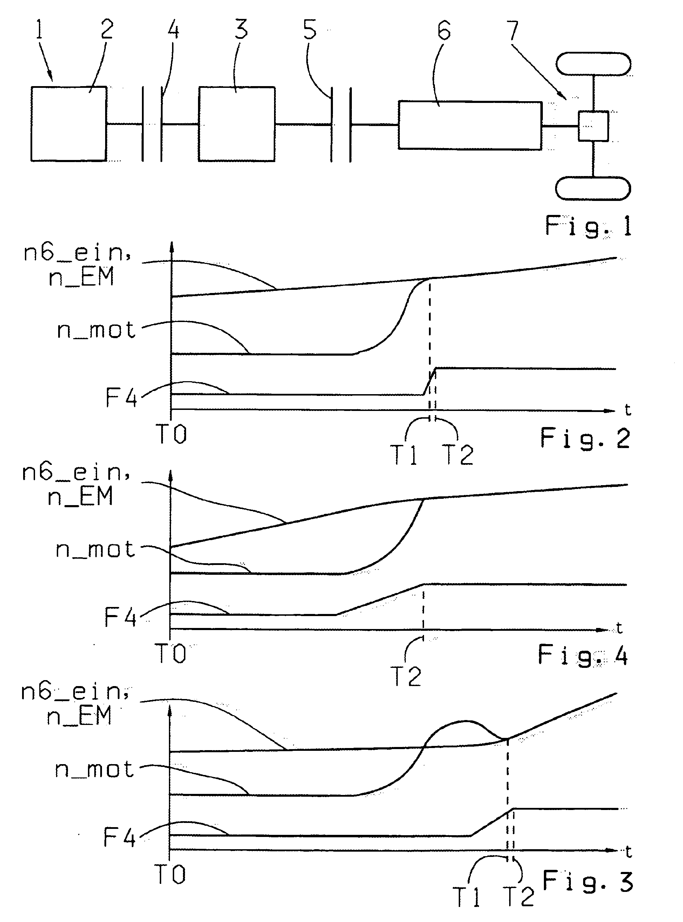

Fig. 1 zeigt einen Parallel-Hybrid-Antriebsstrang 1 eines Fahrzeuges mit einer Brennkraftmaschine 2 und einer elektrischen Maschine 3. Zwischen der Brennkraftmaschine 2 und der elektrischen Maschine 3 ist eine Kupplungseinrichtung 4 angeordnet, über welche die Brennkraftmaschine 2 vom Antriebsstrang 1 trennbar oder an diesen koppelbar ist. In Bezug auf die Brennkraftmaschine 2 ist abtriebsseitig der elektrischen Maschine 3 eine weitere Kupplungseinrichtung 5, eine Getriebeeinrichtung 6 und ein Abtrieb 7 des Parallel-Hybrid-Antriebsstranges 1 vorgesehen, wobei die weitere Kupplungseinrichtung 5 in geöffnetem Zustand die Wirkverbindung zwischen der elektrischen Maschine 3 und der Getriebeeinrichtung 6 deaktiviert.

In Fig. 2 bis Fig. 4 sind jeweils Verläufe von Betriebszustandsparametern des Parallel-Hybrid-Antriebsstranges 1 gemäß Fig. 1 während verschiedener Betriebszustandsverläufe über der Zeit t dargestellt, wobei die Betriebszustandsverläufe gemäß Fig. 2 und Fig. 3 jeweils wenigstens annähernd von demselben Betriebspunkt des Parallel-Hybrid-Antriebsstranges 1 ausgehen.

Der den Betriebszustandsverläufen gemäß Fig. 2 bis Fig. 4 zugrunde liegende Ausgangs- bzw. Betriebspunkt des Parallel-Hybrid-Antriebsstranges 1 ist dadurch charakterisiert, dass die Kupplungseinrichtung 4 sich zunächst in vollständig geöffnetem Betriebszustand befindet und eine Drehzahl n_mot der Brennkraftmaschine 2 wenigstens annähernd einer Leerlaufdrehzahl n_mot_II der Brennkraftmaschine 2 entspricht. Darüber hinaus ist die Drehzahl der elektrischen Maschine 3 größer als die Leerlaufdrehzahl n_mot_II der Brennkraftmaschine 2. Die weitere Kupplungseinrichtung 5 befindet sich während des gesamten nachfolgend betrachteten Zeitraumes, der sich zwischen einem Zeitraum T0, der jeweils den Ausgangspunkt des den Verläufen zugrunde liegenden Betriebszustandsverlaufes darstellt, und einem Zeitpunkt T2, zu dem die Kupplungseinrichtung 4 im Wesentlichen vollständig geschlossen ist, erstreckt, in vollständig geschlossenem Betriebszustand.

Damit entspricht eine Getriebeeingangsdrehzahl n6_ein der Getriebeeinrichtung 6 während des gesamten Zeitraumes einer Drehzahl n_EM der elektrischen Maschine 3. Zudem wird ein mit dem Parallel-Hybrid-Antriebsstrang 1 gemäß Fig. 1 ausgeführtes Hybridfahrzeug bei einer Anforderung zum Ankoppeln der Brennkraftmaschine 2 an den Parallel-Hybrid-Antriebsstrang 1 jeweils rein elektrisch betrieben, wobei das am Abtrieb 7 anliegende Abtriebsmoment zum Zeitpunkt T0 durch die elektrische Maschine 3 allein bereitgestellt wird.

Die Anforderung zum Ankoppeln der Brennkraftmaschine 2 ergeht beispielsweise bei Vorliegen eines Ladezustandes eines der elektrischen Maschine 3 zugeordneten elektrischen Speichers oder wenn im Zugbetrieb des Parallel-Hybrid-Antriebsstranges 1 eine moderate Erhöhung eines fahrerseitigen angeforderten Antriebsmomentes bzw. im Schubbetrieb des Parallel-Hybrid-Antriebsstranges 1 eine Erhöhung des Schubmomentes am Abtrieb 7 die Ankopplung der Brennkraftmaschine 2 an den Antriebsstrang 1 erfordert.

Zum Zeitpunkt T0 liegt der Parallel-Hybrid-Antriebsstrang 1 jeweils in seinem Ausgangsbetriebspunkt vor, wobei die Drehzahl n_mot der Brennkraftmaschine 2 im Zugbetrieb des Parallel-Hybrid-Antriebsstranges 1 und bei Vorliegen einer Anforderung zum Ankoppeln der Brennkraftmaschine 2 sowie eines Antriebsdrehmomentwertes kleiner als eine Drehmomentschwelle bei gleichzeitig vollständig geöffneter Kupplungseinrichtung 4 in der in Fig. 2 näher dargestellten Art und Weise auf die Drehzahl n_EM der elektrischen Maschine 3 geführt wird. Die Brennkraftmaschine 2 wird drehzahl- oder drehmomentgeregelt auf die Getriebeeingangsdrehzahl n6_ein bzw. die Drehzahl n_EM der elektrischen Maschine 3 angehoben bzw. beschleunigt.

Die Kupplungseinrichtung 4 erreicht zum Zeitpunkt T1 wenigstens annähernd ihren synchronen Betriebszustand, wird bei Ermittlung ihres Synchronzustandes durch Anheben der Betätigungskraft F4 nahezu belastungsfrei geschlossen und liegt zum Zeitpunkt T2 in ihrem vollständig geschlossenen Betriebszustand vor. Anschließend wird das Drehmoment der Brennkraftmaschine 2 angehoben, um den angeforderten Drehmomentwert bereitzustellen.

Ausgehend von dem vorbeschriebenen Betriebszustand des Antriebsstranges 1 zum Zeitpunkt T0 wird die Brennkraftmaschine 2 in der in Fig. 3 dargestellten Art und Weise an den Antriebsstrang 1 angekoppelt, wenn ein Antriebsdrehmomentwert größer als die Drehmomentschwelle angefordert wird und das angeforderte Drehmoment das maximale Antriebsmoment der elektrischen Maschine 3 im Zugbetrieb des Antriebsstranges 1 übersteigt. Dann ist ein spontanes Ankoppeln der Brennkraftmaschine 2 an den Antriebsstrang 1 zur Leistungssteigerung zwingend notwendig.

In Abhängigkeit des jeweils vorliegenden Anwendungsfalles wird die Brennkraftmaschine 2 drehzahlgeregelt, momentenlimitiert oder freihochlaufend auf einen Drehzahlwert oberhalb der Drehzahl n_EM der elektrischen Maschine 3 beschleunigt und die Kupplungseinrichtung 4 bei Erreichen des Drehzahlwertes durch rampenförmiges Anheben der Betätigungskraft F4 schlupfend geschlossen. Aufgrund des schlupfenden Betriebes der Kupplungseinrichtung 4 wird zur Steigerung des im Parallel-Hybrid-Antriebsstrang 1 zur Verfügung stehenden Antriebsmomentes zusätzlich die Schwungmasse der rotierenden Brennkraftmaschine 2 genutzt, d. h. sowohl die statischen Motormomente als auch die dynamischen Anteile. Da sich die Brennkraftmaschine 2 zum Ankoppelzeitpunkt bereits auf einem höheren Drehzahlniveau bewegt als bei der zuvor beschriebenen Vorgehensweise und auch im Vergleich zu herkömmlich betriebenen Parallel-Hybrid-Antriebssträngen, ist im Vergleich zu herkömmlich betriebenen Antriebssträngen von Hybridfahrzeugen zum Ankoppelzeitpunkt von der Brennkraftmaschine 2 ein höheres Drehmoment zur Verfügung stellbar.

Somit wird die Drehzahl n_mot der Brennkraftmaschine 2 bei Vorliegen einer Anforderung eines Antriebsdrehmomentwertes größer als die Drehmomentschwelle wird auf einen Drehzahlwert oberhalb der Drehzahl n_EM der elektrischen Maschine geführt und die Kupplungseinrichtung 4 bei Erreichen des Drehzahlwertes schlupfend geschlossen. Zum Zeitpunkt T2, zu dem die Kupplungseinrichtung 4 mit ihrer Schüeßkraft beaufschlagt wird, ist die Kupplungseinrichtung 4 vollständig geschlossen.

Bei dem den Verläufen der Betriebszustandsparameter des Parallel-Hybrid-Antriebsstranges 1 gemäß Fig. 4 zugrunde liegenden Betriebszustandsverlauf befindet sich der Parallel-Hybrid-Antriebsstrang 1 im Schubbetrieb und die Kupplungseinrichtung 4 ist zum Zeitpunkt T0 geöffnet, während die Drehzahl n_mot der Brennkraftmaschine 2 der Leerlaufdrehzahl n_mot_II entspricht und die Drehzahl n_EM der elektrischen Maschine 3, die bei geschlossener weiterer Getriebeeinrichtung 5 der Getriebeeingangsdrehzahl n6_ein entspricht, größer als die Leerlaufdrehzahl n_mot_II ist.

Um am Abtrieb 7 des Parallel-Hybrid-Antriebsstranges 1 ein Schubmoment darstellen zu können, das von der elektrischen Maschine 3 allein nicht erzeugbar ist, wird eine Anforderung zum Ankoppeln der Brennkraftmaschine 2 ausgegeben und die Brennkraftmaschine 2 in die Schubabschaltung überführt oder in dieser weiter betrieben. Die Kupplungseinrichtung 4 wird in Abhängigkeit ihrer Übertragungsfähigkeit bzw. des darüber führbaren Drehmomentes geregelt schlupfend geschlossen. Die Drehzahl n_mot der Brennkraftmaschine 2 wird während des Schließvorganges der Kupplungsvorrichtung 4 in der in Fig. 4 dargestellten Art und Weise in Abhängigkeit der Übertragungsfähigkeit der Kupplungseinrichtung 4 auf das Niveau der Drehzahl n_EM der elektrischen Maschine 3 bzw. der Getriebeeingangsdrehzahl n6_ein geführt. Dabei verbraucht die Brennkraftmaschine 2 in der Schubabschaltung keinen Kraftstoff und das am Abtrieb 7 anzulegende Schubmoment ist bei angekoppelter Antriebsmaschine 2 im gewünschten Umfang darstellbar.

Die Übertragungsfähigkeit der Kupplungseinrichtung 4 wird während des Schließvorganges derart geregelt eingestellt, dass die Drehzahl der Brennkraftmaschine einerseits keinen sprunghaften Anstieg aufweist und die Abtriebsdrehzahl andererseits keine einen Fahrkomfort beeinträchtigende Absenkung bzw. Verringerung aufweist.

Des Weiteren ist es zusätzlich vorgesehen, dass bei Veränderungen der Ausgangsbedingungen, im Speziellen das jeweils angeforderte Drehmoment betreffend sowie ein Wechsel zwischen dem Schubbetrieb und dem Zugbetrieb des Parallel-Hybrid-Antriebsstranges 1, während der Abläufe der anhand von Fig. 2 bis Fig. 4 näher beschriebenen Funktionalitäten des Verfahrens jeweils ein nahtloser Übergang zwischen den drei Teilfunktionen durchgeführt wird, über den jeweils ein der Fahrsituation entsprechendes optimales Vorgehen gewährleistet wird.

### Bezugszeichen

- 1: Parallel-Hybrid-Antriebsstrang
- 2: Brennkraftmaschine
- 3: elektrische Maschine
- 4: Kupplungseinrichtung
- 5: weitere Kupplungseinrichtung
- 6: Getriebeeinrichtung
- 7: Abtrieb
- F4: Betätigungskraft der Kupplungseinrichtung
- n_EM: Drehzahl der elektrischen Maschine
- n_mot: Drehzahl der Brennkraftmaschine
- n6_ein: Getriebeeingangsdrehzahl
- t: Zeit
- T0 bis T2: diskreter Zeitpunkt

## Patentansprüche

1. Verfahren zum Ankoppeln einer Brennkraftmaschine (2) eines Parallel-Hybrid-Antriebsstranges (1) über eine zwischen der Brennkraftmaschine (2) und einer elektrischen Maschine (3) angeordnete Kupplungseinrichtung (4) ausgehend von einem geöffneten Betriebszustand der Kupplungseinrichtung (4), einer Drehzahl (n_mot) der Brennkraftmaschine (2), welche wenigstens annähernd einer Leerlaufdrehzahl (n_mot_II) entspricht, und einer Drehzahl (n_EM) der elektrischen Maschine (3) größer als die Leerlaufdrehzahl (n_mot_II) der Brennkraftmaschine (2), wobei im Zugbetrieb des Antriebsstranges (1) und bei Vorliegen einer Anforderung zum Ankoppeln der Brennkraftmaschine (2) sowie eines Antriebsdrehmomentwertes kleiner als eine Drehmomentschwelle die Drehzahl (n_mot) der Brennkraftmaschine (2) auf die Drehzahl (n_EM) der elektrischen Maschine (3) geführt und die Kupplungseinrichtung (4) wenigstens annähernd im synchronen Betriebszustand geschlossen wird, und wobei das Drehmoment der Brennkraftmaschine (2) anschließend angehoben wird, **dadurch gekennzeichnet, dass** bei Vorliegen einer Anforderung eines Antriebsdrehmomentwertes größer als die Drehmomentschwelle, die Drehzahl (n_mot) der Brennkraftmaschine (2) auf einen Drehzahlwert oberhalb der Drehzahl (n_EM) der elektrischen Maschine (3) geführt und die Kupplungseinrichtung (4) bei Erreichen des Drehzahlwertes schlupfend geschlossen wird, während die Brennkraftmaschine (2) im Schubbetrieb des Antriebsstranges (1) bei Vorliegen der Anforderung zum Ankoppeln der Brennkraftmaschine (2) in die Schubabschaltung überführt wird und die Drehzahl (n_mot) der Brennkraftmaschine (2) während des Schließvorganges der Kupplungseinrichtung (4) in Abhängigkeit der Übertragungsfähigkeit der Kupplungseinrichtung (4) auf die Drehzahl (n_EM) der elektrischen Maschine (3) geführt wird.

2. Verfahren nach Anspruch 1, **dadurch gekennzeichnet, dass** die Drehzahl (n_mot) der Brennkraftmaschine (2) bei Vorliegen der Anforderung zum Ankoppeln der Brennkraftmaschine (2) und eines Antriebsdrehmomentwertes größer als die Drehmomentschwelle geregelt eingestellt wird.

3. Verfahren nach Anspruch 1 oder 2, **dadurch gekennzeichnet, dass** ein Antriebsmoment der Brennkraftmaschine (2) bei Vorliegen der Anforderung zum Ankoppeln der Brennkraftmaschine (2) und eines Antriebsdrehmomentwertes größer als die Drehmomentschwelle während dem Anheben der Drehzahl (n_mot) der Brennkraftmaschine (2) auf einen vordefinierten Drehmomentwert begrenzt wird.

4. Verfahren nach einem der Ansprüche 1 bis 3, **dadurch gekennzeichnet, dass** die Betätigung der Kupplungseinrichtung (4) bei einem Wechsel der Anforderung des Antriebsdrehmomentes variiert wird.

5. Verfahren nach einem der Ansprüche 1 bis 4, **dadurch gekennzeichnet, dass** die Betätigung der Kupplungseinrichtung (4) bei einem Wechsel zwischen einem Zugbetrieb und einem Schubbetrieb des Parallel-Hybrid-Antriebsstranges (1) variiert wird.

## Claims

1. Method for coupling an internal combustion engine (2) of a parallel-hybrid drive train (1) via a clutch device (4) arranged between the internal combustion engine (2) and an electric machine (3) proceeding from an open operating state of the clutch device (4), a rotational speed (n_mot) of the internal combustion engine (2) which corresponds at least approximately to an idling rotational speed (n_mot_11), and a rotational speed (n_EM) of the electric machine (3) greater than the idling rotational speed (n_mot_ll) of the internal combustion engine (2), wherein, during traction operation of the drive train (1) and in the presence of a requirement for coupling of the internal combustion engine (2) and of a drive torque value smaller than a torque threshold, the rotational speed (n_mot) of the internal combustion engine (2) is guided to the rotational speed (n_EM) of the electric machine (3) and the clutch device (4) is closed at least approximately in the synchronous operating state, and wherein the torque of the internal combustion engine (2) is subsequently raised, **characterized in that**, in the presence of a requirement of a drive torque value greater than the torque threshold, the rotational speed (n_mot) of the internal combustion engine (2) is guided to a rotational speed value above the rotational speed (n_EM) of the electric machine (3) and the clutch device (4) is closed in a slipping manner when the rotational speed value is reached, while the internal combustion engine (2) is transferred into deactivation of coasting in coasting operation of the drive train (1) in the presence of a requirement for coupling the internal combustion engine (2) and the rotational speed (n_mot) of the internal combustion engine (2) is guided during the closing operation of the clutch device (4) as a function of the transmission capacity of the clutch device (4) to the rotational speed (n_EM) of the electric machine (3).

2. Method according to Claim 1, **characterized in that** the rotational speed (n_mot) of the internal combustion engine (2) is set to be greater than the torque threshold in a regulated manner in the presence of the requirement for coupling the internal combustion engine (2) and a drive torque value.

3. Method according to Claim 1 or 2, **characterized in that** a drive moment of the internal combustion engine (2) is restricted to a predefined torque value in the presence of the requirement for coupling the internal combustion engine (2) and a drive torque value greater than the torque threshold during raising of the rotational speed (n_mot) of the internal combustion engine (2).

4. Method according to one of Claims 1 to 3, **characterized in that** the actuation of the clutch device (4) is varied in the event of a change in the requirement of the drive torque.

5. Method according to one of Claims 1 to 4, **characterized in that** the actuation of the clutch device (4) is varied in the event of a change between a traction operation and a coasting operation of the parallel-hybrid drive train (1).

## Revendications

1. Procédé pour l'accouplement d'un moteur à combustion interne (2) d'une transmission hybride parallèle (1) par le biais d'un dispositif d'embrayage (4) disposé entre le moteur à combustion interne (2) et une machine électrique (3) à partir d'un état de fonctionnement ouvert du dispositif d'embrayage (4), d'un régime (n_mot) du moteur à combustion interne (2) qui correspond au moins approximativement à un régime de marche à vide (n_mot_II), et d'un régime (n_EM) de la machine électrique (3) supérieur au régime de marche à vide (n_mot_II) du moteur à combustion interne (2), dans lequel, en mode de traction de la transmission (1) et en présence d'une demande d'accouplement du moteur à combustion interne (2) et d'une valeur de couple d'entraînement inférieure à un seuil de couple, le régime (n_mot) du moteur à combustion interne (2) est amené au régime (n_EM) de la machine électrique (3) et le dispositif d'embrayage (4) est fermé au moins approximativement dans l'état de fonctionnement synchrone, et dans lequel le couple du moteur à combustion interne (2) est ensuite augmenté, **caractérisé en ce qu'**en présence d'une demande d'une valeur de couple d'entraînement supérieure au seuil de couple, le régime (n_mot) du moteur à combustion interne (2) est amené à une valeur de régime au-dessus du régime (n_EM) de la machine électrique (3) et le dispositif d'embrayage (4), à l'atteinte de la valeur de régime, est fermé par glissement, tandis que le moteur à combustion interne (2), en mode de poussée de la transmission (1), en présence de la demande d'accouplement du moteur à combustion interne (2), est commuté en mode d'interruption de poussée et le régime (n_mot) du moteur à combustion interne (2) pendant l'opération de fermeture du dispositif d'embrayage (4) est amené, en fonction de la capacité de transmission du dispositif d'embrayage (4), au régime (n_EM) de la machine électrique (3).

2. Procédé selon la revendication 1, **caractérisé en ce que** le régime (n_mot) du moteur à combustion interne (2), en présence de la demande d'accouplement du moteur à combustion interne (2) et d'une valeur de couple d'entraînement supérieure au seuil de couple, est ajusté de manière régulée.

3. Procédé selon la revendication 1 ou 2, **caractérisé en ce qu'**un couple d'entraînement du moteur à combustion interne (2), en présence de la demande d'accouplement du moteur à combustion interne (2) et d'une valeur de couple d'entraînement supérieure au seuil de couple, pendant l'augmentation du régime (n_mot) du moteur à combustion interne (2), est limité à une valeur de couple prédéfinie.

4. Procédé selon l'une quelconque des revendications 1 à 3, **caractérisé en ce que** l'actionnement du dispositif d'embrayage (4) est varié lors d'un changement de la demande de couple d'entraînement.

5. Procédé selon l'une quelconque des revendications 1 à 4, **caractérisé en ce que** l'actionnement du dispositif d'embrayage (4) est varié dans le cas d'un changement entre un mode de traction et un mode de poussée de la transmission hybride parallèle (1).
